# EUROPEAN PATENT APPLICATION

(11) **EP 4 718 078 A1**
(43) Date of publication of application: **01.04.2026**
(21) Application number: 25201482.4
(22) Date of filing: 10.09.2025
(51) Int. Cl.: G01N 35/00

(54) **ANALYSIS APPARATUS**

(30) Priority: 30.09.2024 JP 2024171315
(71) Applicant: FUJIFILM Corporation, Tokyo 106-8620 (JP)
(72) Inventor: TAKAHASHI, Atsushi, Tokyo, 106-8620 (JP)
(74) Representative: Dehns Germany Partnerschaft mbB

(57) **Abstract**

Provided is an analysis apparatus capable of suppressing occurrence of a phenomenon in which a rear end of an analysis chip lifts off a transport table while the analysis chip is being transported from a standby region to a target region as the rear end of the analysis chip is pushed by a transport bar.

An analysis apparatus (10) includes a transport bar (22) that transports a flat analysis chip (12) located in a standby region (30) on a transport table (20) to a target region (44) by pushing a rear end (12A) of the analysis chip (12) along the transport table (20), and a pressing mechanism (48) that laterally presses the analysis chip (12) in the target region (44).

## Description

### BACKGROUND OF THE INVENTION

### 1. Field of the Invention

The present disclosure relates to an analysis apparatus.

### 2. Description of the Related Art

WO2013/084345A discloses an image acquisition system including a unit that holds a prepared slide on a test object stage. WO2013/084345A discloses an example in which a leaf spring is used as the unit that holds the prepared slide on the test object stage. Examples of the method of holding the prepared slide on the test object stage using the leaf spring include a method of pushing a non-imaging region of the prepared slide in a Z direction and a method of pushing a side surface of the prepared slide in an XY direction.

JP2013-076683A discloses a biochemical analyzer comprising an element cartridge. In the biochemical analyzer disclosed in JP2013-076683A, a plurality of unused dry analytical elements are accommodated in the element cartridge in a state of being stacked. The dry analytical elements are positioned in the element cartridge so as to be individually taken out. In a case of transporting the dry analytical elements, the dry analytical elements are sequentially taken out one by one from the element cartridge by a transport device and sent to the analysis apparatus through a transport path. The transport is performed using vacuum suction or a mechanical arm, and the dry analytical elements are accurately disposed at positions required for the analysis. This process allows dry analytical elements to be supplied automatically and efficiently, allowing the analysis work to proceed continuously.

JP2010-156638A discloses a radioactive substance measurement device. The radioactive substance measurement device disclosed in JP2010-156638A includes a positioning mechanism that accurately disposes a cartridge at a predetermined position. In a collection station, the cartridge is fixed by a stopper. This ensures that the cartridge is reliably used for collection and measurement. The radioactive substance measurement device stores the cartridge in a sealed case and protects the cartridge from an external environment such as moisture. The cartridges are sequentially taken out, accurately disposed by the positioning mechanism, and collected after the measurement.

### SUMMARY OF THE INVENTION

One embodiment of the present disclosure provides an analysis apparatus capable of suppressing occurrence of a phenomenon in which a rear end of an analysis chip lifts off a transport table while the analysis chip is being transported from a standby region to a target region as the rear end of the analysis chip is pushed by a transport bar.

A first aspect according to the present disclosure is an analysis apparatus comprising: a transport bar that transports a flat analysis chip located in a standby region on a transport table to a target region by pushing a rear end of the analysis chip along the transport table; and a pressing mechanism that laterally presses the analysis chip in the target region.

A first embodiment according to the present disclosure is the analysis apparatus according to the first aspect, in which a plurality of the analysis chips are capable of being stacked in a cartridge provided on the transport table under their own weight, and the standby region is a region where the analysis chip in a lowermost layer among the plurality of analysis chips stacked in the cartridge is located.

A second embodiment according to the present disclosure is the analysis apparatus according to the first embodiment, which further comprises: a transport passage that is a path along which the analysis chip is transported from the standby region to the target region, in which the cartridge has an opening at a position corresponding to the transport passage.

A third embodiment according to the present disclosure is the analysis apparatus according to the first or second embodiments, in which the cartridge has a through-hole at a position facing the target region in a transport direction of the analysis chip, and the transport bar transports the analysis chip to the target region by pushing the rear end of the analysis chip in the lowermost layer along the transport table via the through-hole.

A fourth embodiment according to the present disclosure is the analysis apparatus according to the third embodiment, in which the transport bar reciprocates between the standby region and the target region via the through-hole to transport the plurality of analysis chips stacked in the cartridge from the standby region to the target region in order from the analysis chip on a lowermost layer side to the analysis chip on an uppermost layer side.

A fifth embodiment according to the present disclosure is the analysis apparatus according to any one of the first to fourth embodiments, in which a distance between the standby region and the target region is a distance over which the analysis chip straddles the standby region and the target region in a transport direction of the analysis chip.

A sixth embodiment according to the present disclosure is the analysis apparatus according to any one of the first aspect or first to fifth embodiments, which further comprises: a transport passage that is a path along which the analysis chip is transported from the standby region to the target region, in which at least a part of the pressing mechanism protrudes into the transport passage in a state where the pressing mechanism and the analysis chip are not in contact with each other.

A seventh embodiment according to the present disclosure is the analysis apparatus according to any one of the first aspect or first to sixth embodiments, in which the analysis chip is pushed into the target region by the transport bar while receiving a lateral pressing force from the pressing mechanism.

An eighth embodiment according to the present disclosure is the analysis apparatus according to any one of the first aspect or first to seventh embodiments, in which a clearance is provided on an upper surface side of the analysis chip located in the target region, the clearance extending across an entire upper surface of the analysis chip.

A ninth embodiment according to the present disclosure is the analysis apparatus according to any one of the first aspect or first to eighth embodiments, in which a limiting member that limits upward movement of the analysis chip is provided in the target region.

A tenth embodiment according to the present disclosure is the analysis apparatus according to the ninth embodiment, in which a height to the limiting member in the target region is greater than a thickness of the analysis chip and is smaller than a sum of the thickness of the analysis chip and a thickness of the transport bar.

An eleventh embodiment according to the present disclosure is the analysis apparatus according to the ninth or tenth embodiments, in which the limiting member is at least one rib that protrudes from an upper side to a lower side of the target region.

A twelfth embodiment according to the present disclosure is the analysis apparatus according to any one of the first aspect or first to eleventh embodiments, in which the pressing mechanism has a wall with which one side surface of the analysis chip comes into contact in the target region, and an elastic member that presses the other side surface of the analysis chip in the target region, and the elastic member presses the one side surface against the wall by pressing the other side surface in the target region.

A thirteenth embodiment according to the present disclosure is the analysis apparatus according to the twelfth embodiment, in which the elastic member is installed at a position where the elastic member presses the other side surface in a state of being deformed into a shape in which an elastic force is accumulated.

A fourteenth embodiment according to the present disclosure is the analysis apparatus according to the twelfth or thirteenth embodiments, in which the elastic member is a spring.

A fifteenth embodiment according to the present disclosure is the analysis apparatus according to the fourteenth embodiment, in which the spring is a leaf spring.

A sixteenth embodiment according to the present disclosure is the analysis apparatus according to the twelfth or thirteenth embodiment, in which the elastic member is a member including a spring and a transmitting member that is attached to the spring and that transmits an elastic force of the spring to the other side surface by coming into contact with the other side surface.

A seventeenth embodiment aspect according to the present disclosure is the analysis apparatus according to any one of the first aspect or first to eleventh embodiments, in which the pressing mechanism includes a first elastic member that presses one side surface of the analysis chip in the target region, and a second elastic member that presses the other side surface of the analysis chip in the target region.

An eighteenth embodiment according to the present disclosure is the analysis apparatus according to the seventeenth embodiment, in which the first elastic member is installed at a position where the first elastic member presses the one side surface in a state of being deformed into a shape in which an elastic force is accumulated, and the second elastic member is installed at a position where the second elastic member presses the other side surface in a state of being deformed into a shape in which an elastic force is accumulated.

A nineteenth embodiment according to the present disclosure is the analysis apparatus according to the seventeenth or eighteenth embodiment, in which the first elastic member and/or the second elastic member is a spring.

A twentieth embodiment according to the present disclosure is the analysis apparatus according to the nineteenth embodiment, in which the spring is a leaf spring.

A twenty-first embodiment according to the present disclosure is the analysis apparatus according to the seventeenth or eighteenth embodiment, in which the first elastic member is a member including a first spring and a first transmitting member that is attached to the first spring and that transmits an elastic force of the first spring to the one side surface by coming into contact with the one side surface, and the second elastic member is a member including a second spring and a second transmitting member that is attached to the second spring and that transmits an elastic force of the second spring to the other side surface by coming into contact with the other side surface.

A twenty-second embodiment according to the present disclosure is the analysis apparatus according to any one of the first aspect or first to twenty-first embodiments, in which the target region is provided in a processing section that performs processing on the analysis chip.

A twenty-third embodiment according to the present disclosure is the analysis apparatus according to the twenty-second embodiment, in which the processing includes spotting of a sample.

### BRIEF DESCRIPTION OF THE DRAWINGS

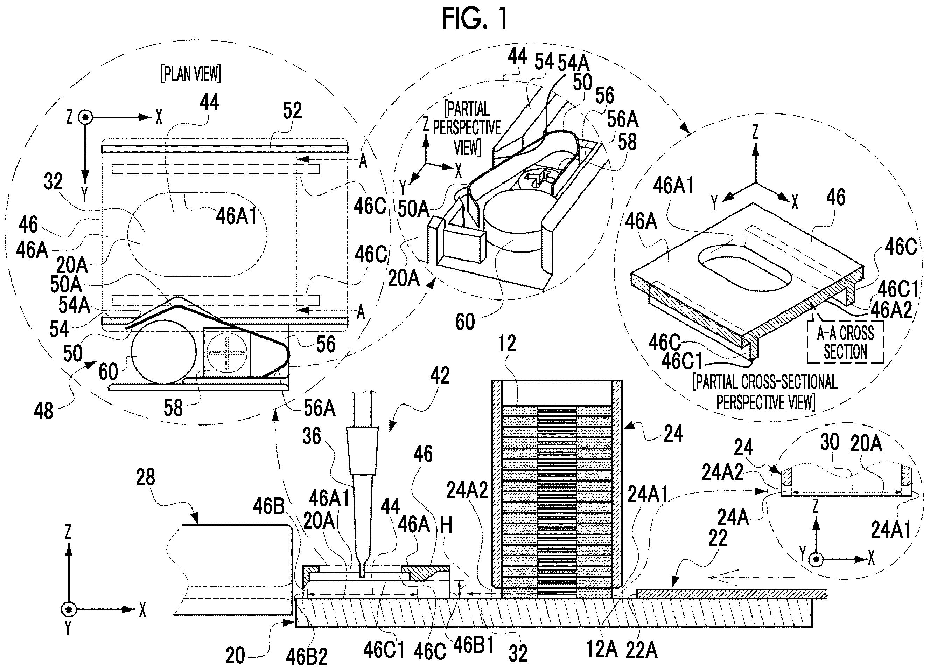

FIG. 1 is a schematic longitudinal cross-sectional view showing an example of a partial configuration of a transport system included in an analysis apparatus according to an embodiment, and is a conceptual diagram showing an example of a main part configuration around the transport system.

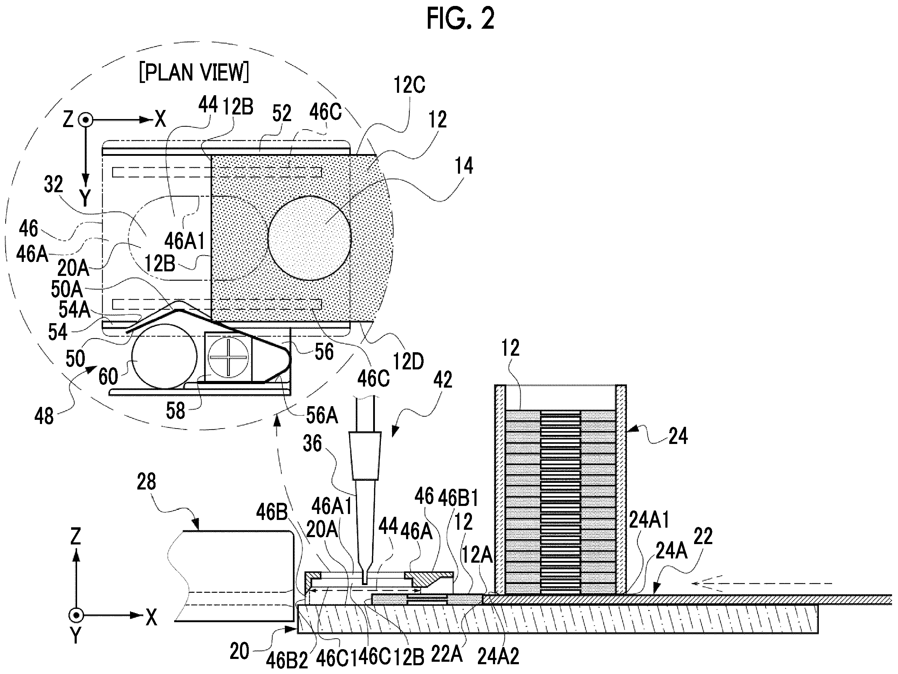

FIG. 2 is a schematic longitudinal cross-sectional view showing an example of a partial configuration of the transport system in a case where an analysis chip enters a target region in the analysis apparatus according to the embodiment, and is a schematic plan view showing an example of a main part configuration around the transport system.

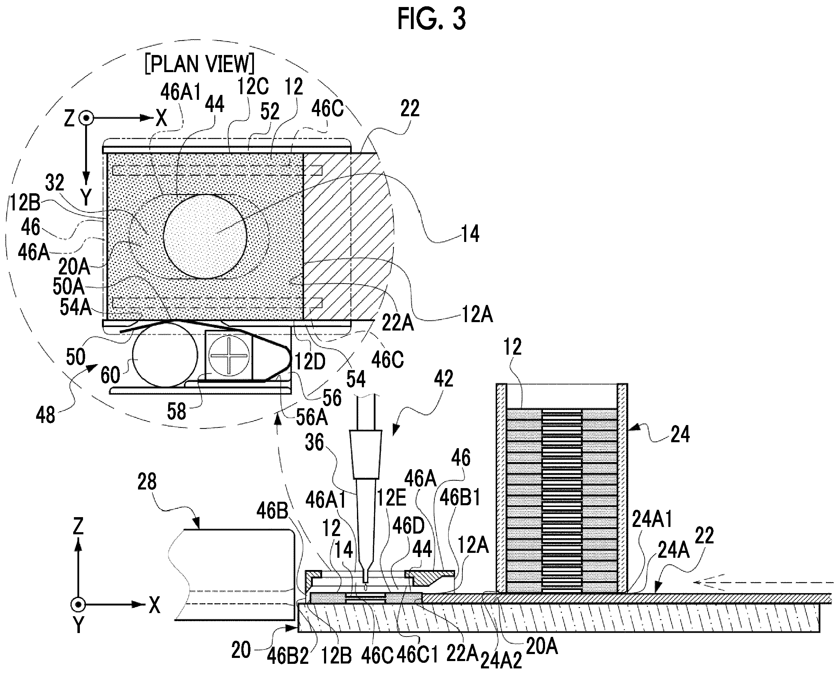

FIG. 3 is a schematic longitudinal cross-sectional view showing an example of a partial configuration of the transport system in a case where the analysis chip is located in the target region in the analysis apparatus according to the embodiment, and is a schematic plan view showing an example of a main part configuration around the transport system.

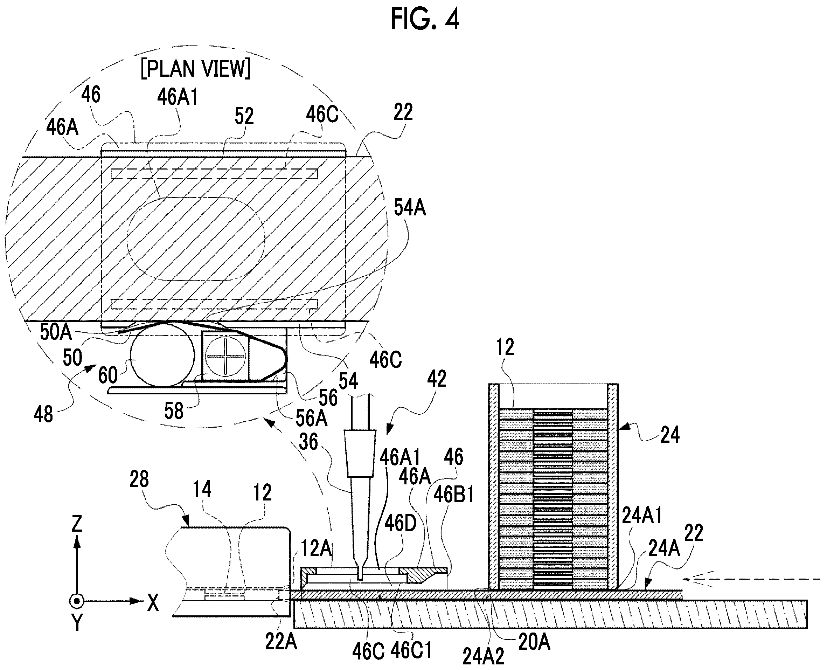

FIG. 4 is a schematic longitudinal cross-sectional view showing an example of a partial configuration of the transport system in a case where the analysis chip is loaded into an incubator in the analysis apparatus according to the embodiment, and is a schematic plan view showing an example of a main part configuration around the transport system.

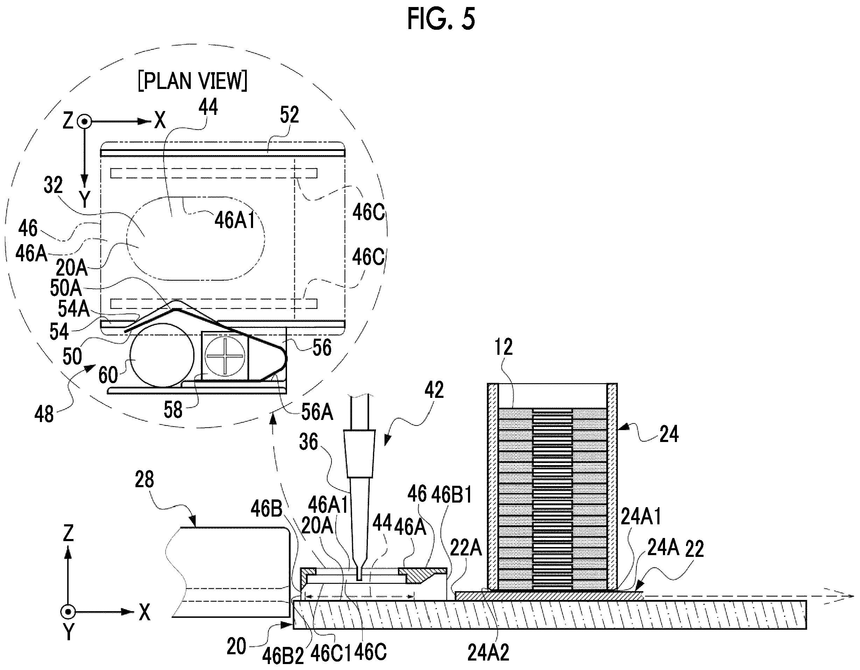

FIG. 5 is a schematic longitudinal cross-sectional view showing an example of a partial configuration of the transport system in which a transport bar is returning to its original position in the analysis apparatus according to the embodiment, and is a schematic plan view showing an example of a main part configuration around the transport system.

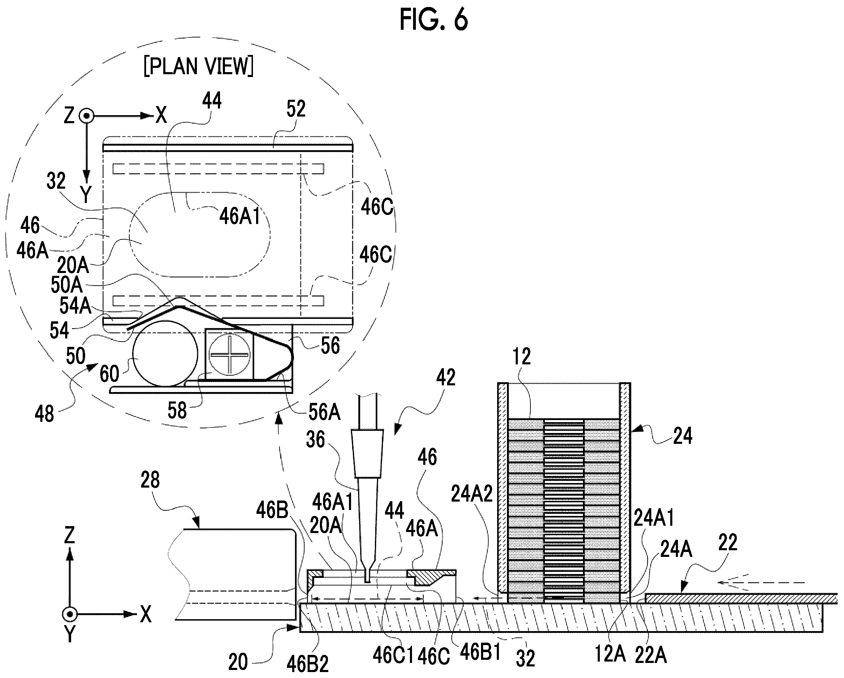

FIG. 6 is a schematic longitudinal cross-sectional view showing an example of a partial configuration of the transport system in a case where a transport bar is returned to its original position in the analysis apparatus according to the embodiment, and is a schematic plan view showing an example of a main part configuration around the transport system.

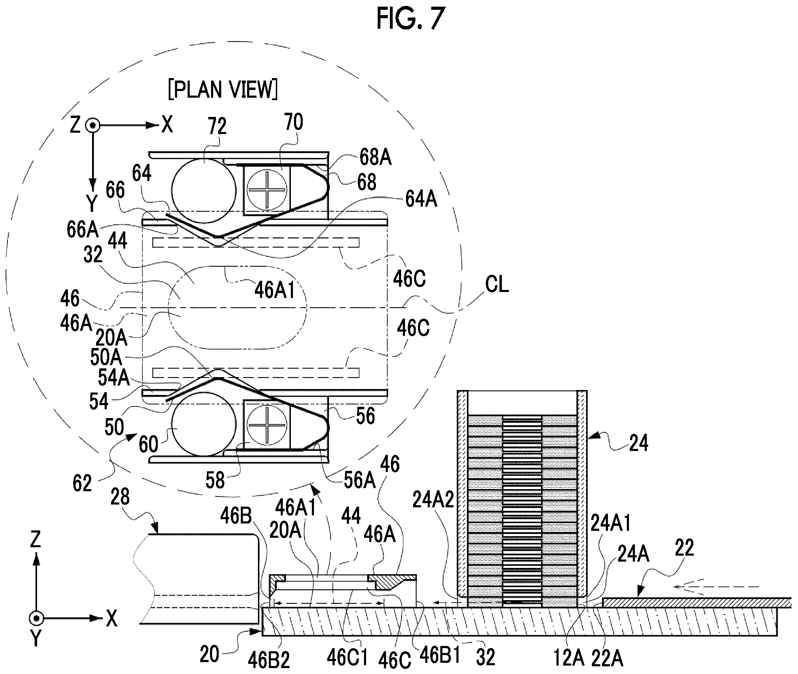

FIG. 7 is a schematic longitudinal cross-sectional view showing a first modification example of a partial configuration of the transport system included in the analysis apparatus according to the embodiment, and is a conceptual diagram showing an example of a main part configuration around the transport system.

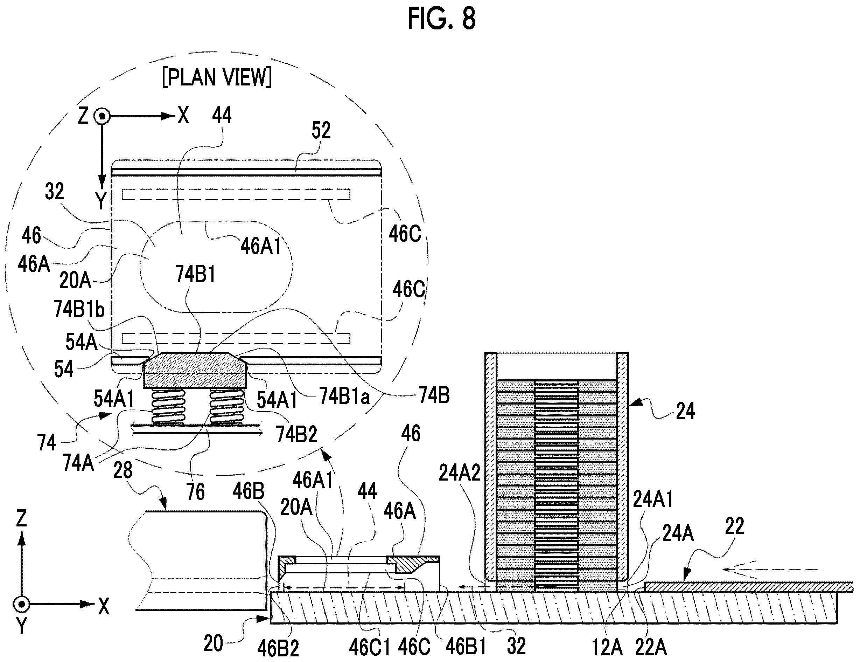

FIG. 8 is a schematic longitudinal cross-sectional view showing a second modification example of a partial configuration of the transport system included in the analysis apparatus according to the embodiment, and is a conceptual diagram showing an example of a main part configuration around the transport system.

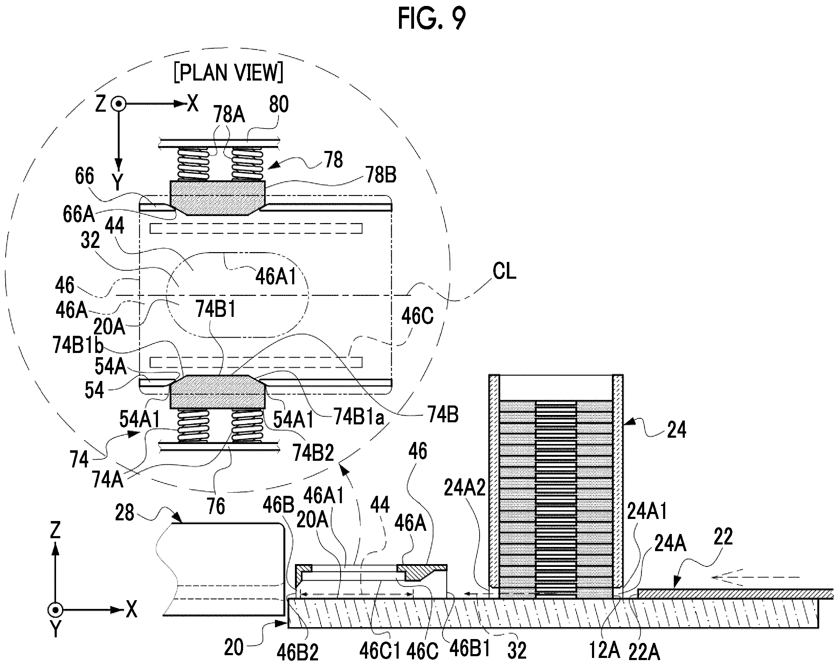

FIG. 9 is a schematic longitudinal cross-sectional view showing a third modification example of a partial configuration of the transport system included in the analysis apparatus according to the embodiment, and is a conceptual diagram showing an example of a main part configuration around the transport system.

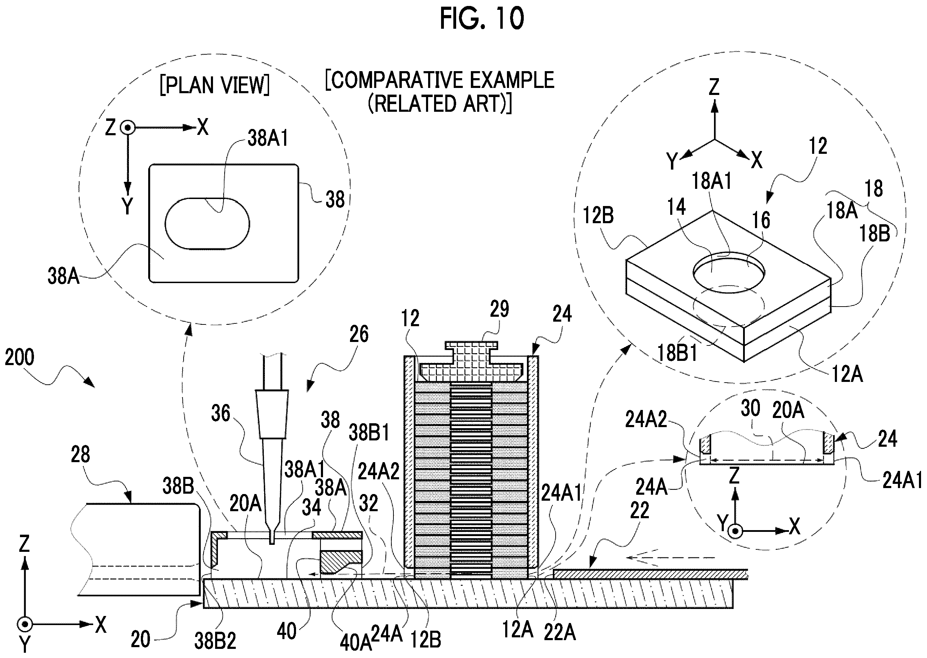

FIG. 10 is a schematic longitudinal cross-sectional view showing an example of a partial configuration of a transport system included in an analysis apparatus in the related art, and is a conceptual diagram showing an example of a main part configuration around the transport system.

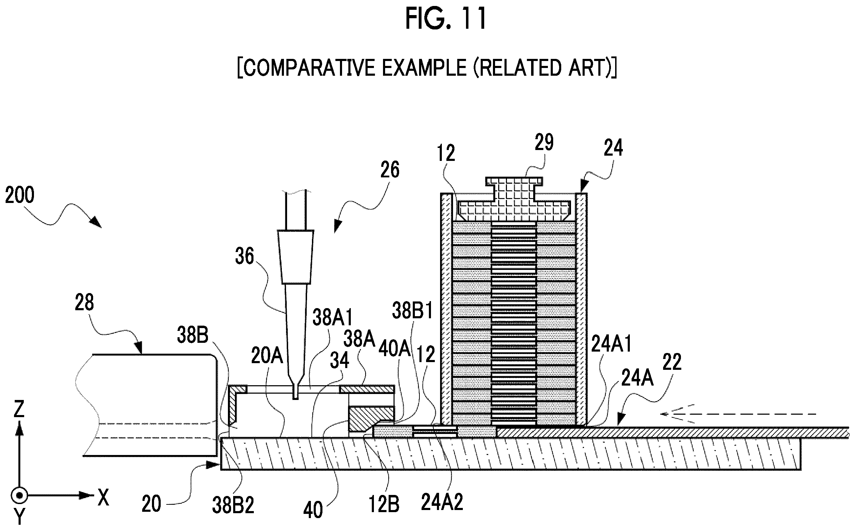

FIG. 11 is a schematic longitudinal cross-sectional view showing an example of a partial configuration of the transport system in a case where a tip of an analysis chip comes into contact with a weight inside a cover in the analysis apparatus in the related art, and is a schematic plan view showing an example of a main part configuration around the transport system.

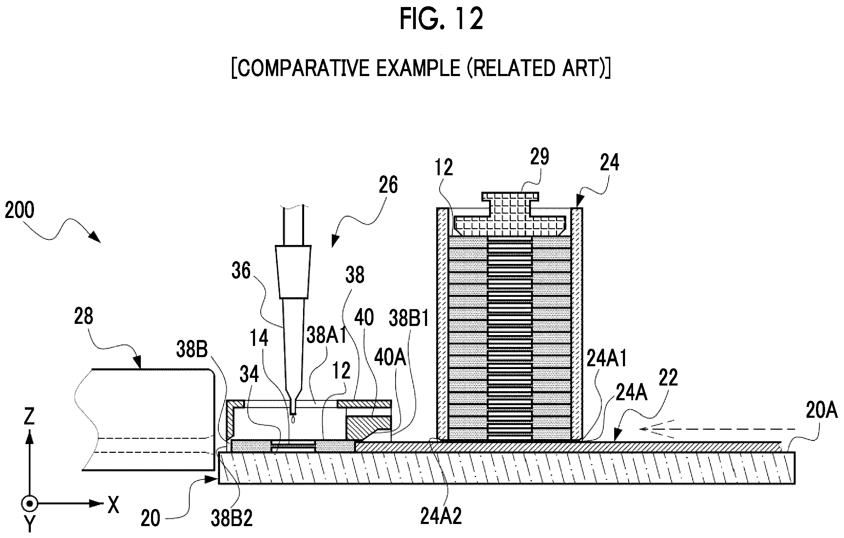

FIG. 12 is a schematic longitudinal cross-sectional view showing an example of a partial configuration of the transport system in a case where the analysis chip is located in a target region in the analysis apparatus in the related art.

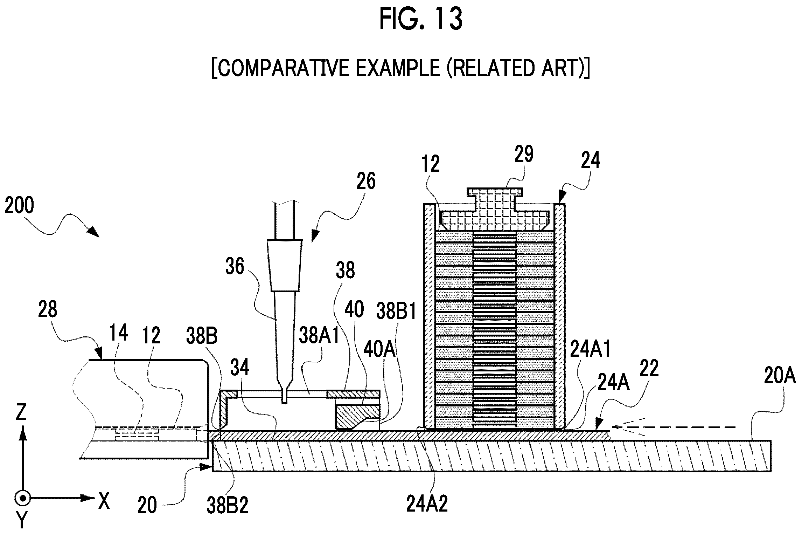

FIG. 13 is a schematic longitudinal cross-sectional view showing an example of a partial configuration of the transport system in a case where the analysis chip is located in an incubator in the analysis apparatus in the related art.

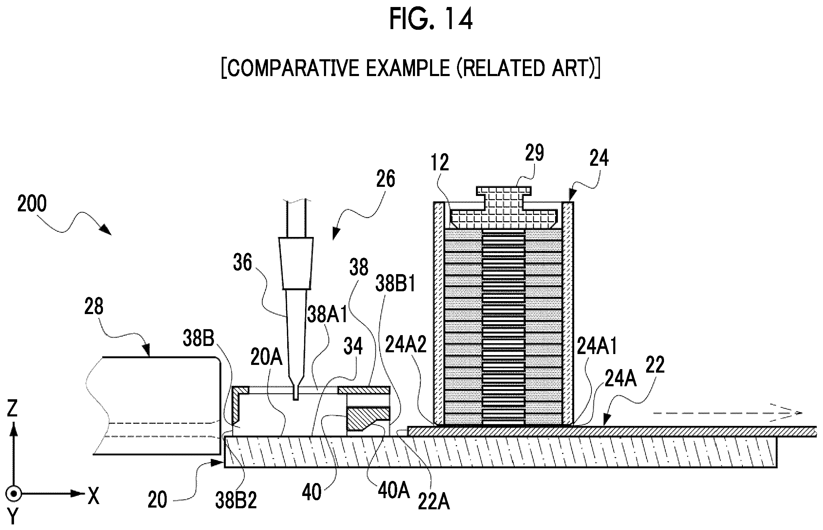

FIG. 14 is a schematic longitudinal cross-sectional view showing an example of a partial configuration of the transport system in which a transport bar is returning to its original position in the analysis apparatus in the related art.

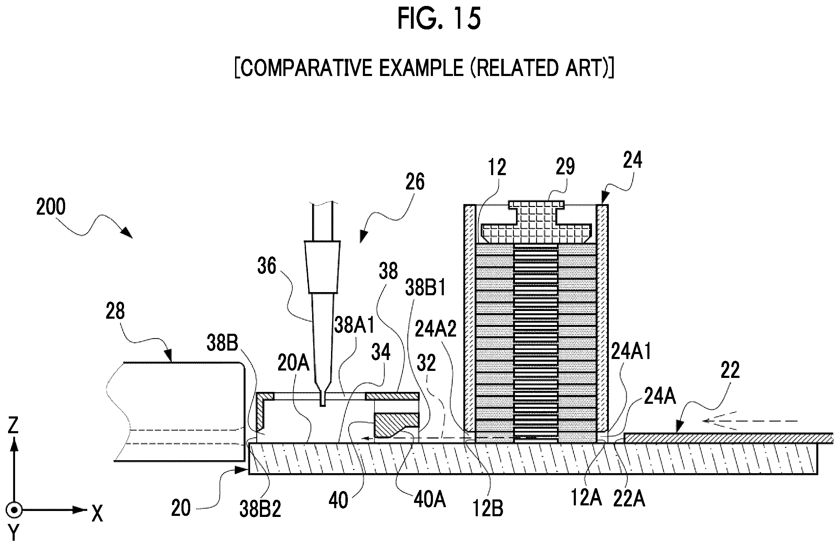

FIG. 15 is a schematic longitudinal cross-sectional view showing an example of a partial configuration of the transport system in a case where a transport bar is returned to its original position in the analysis apparatus in the related art.

### DESCRIPTION OF THE PREFERRED EMBODIMENTS

Hereinafter, an example of an embodiment of an analysis apparatus according to the present disclosure will be described with reference to the accompanying drawings.

First, terms used in the following description will be described.

In the present specification, the term "orthogonal" refers to orthogonality in a sense including an error generally allowed in the technical field to which the technology of the present disclosure belongs, in addition to perfect orthogonality. In addition, in the present specification, the term "perpendicular" refers to perpendicularity in a sense including an error generally allowed in the technical field to which the technology of the present disclosure belongs, in addition to being perfect perpendicularity. In addition, in the present specification, the term "parallel" refers to parallelism in a sense including an error generally allowed in the technical field to which the technology of the present disclosure belongs, in addition to perfect parallelism. In addition, in the present specification, the term "horizontal" refers to horizontality in a sense including an error generally allowed in the technical field to which the technology of the present disclosure belongs, in addition to perfect horizontality.

In the present specification, "A and/or B" is synonymous with "at least one of A or B". That is, "A and/or B" may refer to A alone, B alone, or a combination of A and B. In addition, in the present specification, in a case in which three or more matters are expressed with the connection of "and/or", the same concept as "A and/or B" is applied.

First, prior to the description of the present embodiment, Comparative Example will be described with reference to FIGS. 10 to 15.

### Comparative Example

FIGS. 10 to 15 are schematic longitudinal cross-sectional views of an example of a partial configuration of a transport system included in a known analysis apparatus 200 in the related art.

As shown in FIG. 10 as an example, the analysis apparatus 200 is an apparatus that analyzes a sample. In the analysis apparatus 200, a dry-type analysis chip 12 is used, and the concentration of a test target substance contained in a sample spotted onto the analysis chip 12 is measured.

For example, the analysis apparatus 200 uses blood as a sample and optically measures the concentration of a test target substance contained in the blood. As one example of the optical measurement of the concentration of the test target substance, the concentration of the test target substance is measured through colorimetric measurement.

A shape of the analysis chip 12 is a flat plate shape. In general, in a case where the analysis chip 12 has a flat plate shape, the analysis chip 12 is also referred to as a slide.

The analysis chip 12 has a reaction region 14 in which a reagent is immobilized. The reagent reacts with the test target substance to produce a substance that develops specific color. Hereinafter, a substance that develops color by reacting with the test target substance is referred to as a "reactant". Examples of the reagent include a solid-phase dry reagent that is in a dry state at least at the time of shipment. A sample is spotted onto the reaction region 14.

The analysis chip 12 has a carrier 16 onto which a sample is spotted. The carrier 16 is accommodated in a case 18. The case 18 includes a first case 18A and a second case 18B. The carrier 16 is sandwiched between the first case 18A and the second case 18B. An opening 18A1 communicating with a front surface side of the carrier 16 is formed in the first case 18A.

The second case 18B has an opening 18B1 formed on a side opposite to a side of the case 18 where the opening 18A1 is formed. The opening 18B1 communicates with a back surface of the carrier 16 from the second case 18B side. The reaction region 14 is a region exposed from the opening 18A1 and the opening 18B1. A sample is spotted onto the reaction region 14 via the opening 18A1, and the reaction region 14 is irradiated with light via the opening 18B1.

The analysis apparatus 200 comprises a transport table 20, a transport bar 22, a cartridge 24, a sample spotting device 26, and an incubator 28.

The transport table 20 is a table used for transporting the analysis chip 12. The analysis chip 12 is linearly transported on the transport table 20 toward the incubator 28. A front surface 20A of the transport table 20 is a surface parallel to a horizontal plane. The analysis chip 12 is placed on the front surface 20A in a state where the surface of the second case 18B where the opening 18B1 is formed is in contact with the front surface 20A. The analysis chip 12 slides on the front surface 20A toward the incubator 28.

An X direction, a Y direction, and a Z direction are defined for the analysis apparatus 200. The X direction is a direction in which the analysis chip 12 is transported, and is a direction along a horizontal direction. The Y direction is a direction orthogonal to the X direction in the same horizontal plane. The Z direction is a direction perpendicular to both the X direction and the Y direction.

The transport bar 22 is formed in a flat plate shape. A thickness of the transport bar 22 is equal to or less than a thickness of the analysis chip 12.

The cartridge 24 is provided on the front surface 20A. A lower end of the cartridge 24 is fixed to the front surface 20A. The analysis chip 12 is accommodated in the cartridge 24. A plurality of the analysis chips 12 can be stacked in the cartridge 24 under their own weight. In the example shown in FIG. 10, 18 analysis chips 12 are accommodated in the cartridge 24 in a state of being stacked along the Z direction, and a weight 29 is placed on the analysis chip 12 in the uppermost layer. The number of the analysis chips 12 accommodated in the cartridge 24 may be any number as long as the total does not exceed the capacity of the cartridge 24.

The analysis chip 12 is located in a standby region 30 on the front surface 20A. In the example shown in FIG. 10, the standby region 30 is a region on the front surface 20A where the analysis chip 12 in the lowermost layer among the plurality of analysis chips 12 stackedin the cartridge 24 is located.

The analysis apparatus 200 comprises a transport passage 32. The transport passage 32 is provided on the front surface 20A. The transport passage 32 is a path along which the analysis chip 12 is transported from the standby region 30 to a target region 34. The target region 34 is a region that exists as one of transport destinations of the analysis chip 12. An example of the target region 34 is a region where a sample can be spotted onto the reaction region 14.

The cartridge 24 has a through-hole 24A at a position facing the target region 34 in a transport direction of the analysis chip 12. The through-hole 24A is located on the transport passage 32. That is, the through-hole 24A is present at a position corresponding to the lowermost layer of the plurality of analysis chips 12 stackedon the cartridge 24, and penetrates the cartridge 24 along the X direction. The through-hole 24A has openings 24A1 and 24A2 at positions corresponding to the transport passage 32.

The transport bar 22 reciprocates linearly on the transport passage 32 by receiving power generated by a drive source (for example, a motor or a solenoid). A tip 22A of the transport bar 22 presses a rear end 12A of the analysis chip 12 (that is, the analysis chip 12 in the lowermost layer in the cartridge 24) located in the standby region 30 via the opening 24A1. Accordingly, the analysis chip 12 located in the standby region 30 is transported along the transport passage 32 toward the target region 34 (see FIG. 11).

The sample spotting device 26 is provided between the cartridge 24 and the incubator 28. The target region 34 is provided on the sample spotting device 26. The sample spotting device 26 performs processing on the analysis chip 12 located in the target region 34. The term "processing" as used herein includes spotting of a sample. That is, the sample spotting device 26 spots a sample onto the reaction region 14 of the analysis chip 12 transported to the target region 34.

The sample spotting device 26 comprises a spotting unit 36, a translucent or transparent cover 38, and a weight 40. A sample is dropped from a nozzle of the spotting unit 36. The cover 38 is a container-shaped cover having an internal space. An opening 38A1 having a track shape in plan view and whose longitudinal direction is aligned with the X direction is formed in an upper wall 38A of the cover 38.

The target region 34 is provided within the cover 38. The target region 34 is located immediately below the nozzle of the spotting unit 36 such that a sample is dropped onto the reaction region 14 of the analysis chip 12 from the nozzle of the spotting unit 36 via the opening 38A1 in a case where the analysis chip 12 is located in the target region 34. The cover 38 has a through-hole 38B formed therein in a manner similar to the through-hole 24A formed in the cartridge 24. The through-hole 38B has an opening 38B1 at a position facing the opening 24A2 and has an opening 38B2 at a position opposite to the opening 38B1 in the X direction.

The weight 40 is provided inside the cover 38 so as to be slidable along the Z direction. Inside the cover 38, the weight 40 is disposed on the opening 38B1 side at a position where it blocks the transport passage 32 due to its own weight. A taper 40A that gradually increases in thickness from the opening 38B1 side to a back side of the through-hole 38B (that is, the opening 38B2 side) is formed in the weight 40.

The analysis chip 12 transported from the standby region 30 to the transport passage 32 by the transport bar 22 is inserted from a tip 12B side of the analysis chip 12 into the through-hole 38B via the opening 38B1. The tip 12B of the analysis chip 12 inserted into the through-hole 38B comes into contact with the taper 40A of the weight 40 (see FIG. 11). Then, in a case where the rear end 12A of the analysis chip 12 is further pressed by the tip 22A of the transport bar 22, the analysis chip 12 raises the weight 40 against the force of the weight 40 and reaches the target region 34 while passing under the weight 40 (see FIG. 12). In a case where the analysis chip 12 is located in the target region 34, the weight 40 presses the analysis chip 12 from above, and thus the analysis chip 12 is held in the target region 34. In this state, the spotting unit 36 drops a sample onto the reaction region 14 of the analysis chip 12, and the sample is spotted onto the reaction region 14 (see FIG. 12).

In a case where the spotting of the sample onto the reaction region 14 is completed, the rear end 12A of the analysis chip 12 is further pressed by the tip 22A of the transport bar 22, and the analysis chip 12 is loaded into the incubator 28 (see FIG. 13).

The incubator 28 has a rotary table (not shown) that is rotatable in a plane parallel to the front surface 20A. The rotary table holds the plurality of analysis chips 12 along a circumferential direction. The incubator 28 warms the analysis chips on the rotary table to a target temperature (for example, 37°C), and transports each of the plurality of analysis chips 12 held on the rotary table to a measurement position in order through the rotation of the rotary table to perform optical measurement.

Examples of the optical measurement that is performed in the incubator 28 include colorimetric measurement (that is, quantitative measurement of a test target substance using a colorimetric method). In the colorimetric measurement, the reaction region 14 is irradiated with light, and the intensity of reflected light reflected from the reaction region 14 is measured. The intensity of the reflected light indicates the concentration of the test target substance based on a degree of color development of the reactant. In the colorimetric measurement, light beams having a plurality of different wavelengths are used, and a wavelength optimal for the test target substance is selected. In addition, a black density plate and a white density plate are used as reference standards, and thus the optical measurement is corrected, and accuracy of a measured value is ensured. In the colorimetric measurements, by referring to the black density plate and the white density plate, it is determined what level of concentration the intensity of the reflected light represents, and accurate concentration of the test target substance is derived.

After the analysis chip 12 is loaded into the incubator 28, as shown in FIG. 14 as an example, the transport bar 22 moves in a direction opposite to the transport direction of the analysis chip 12. Then, as shown in FIG. 15 as an example, the transport bar 22 is returned to its original position.

In a case where the tip 22A of the transport bar 22 passes through the openings 24A2 and 24A1 of the through-hole 24A of the cartridge 24 in order in a process in which the transport bar 22 is returned to its original position from the target region 34, as shown in FIG. 15 as an example, one analysis chip 12 falls into the standby region 30 due to the weight of the weight 29 and the weight of each analysis chip 12 in the cartridge 24. The analysis chip 12 thus disposed in the standby region 30 is a target to be transported to the target region 34 by the transport bar 22.

In the analysis apparatus 200 configured as described above, in a process in which the analysis chip 12 is transported from the standby region 30 to the target region 34 by being pushed by the transport bar 22, the tip 12B of the analysis chip 12 comes into contact with the taper 40A of the weight 40 provided in the cover 38. In this case, a vertical rotation torque (that is, a torque in a direction in which the tip 12B of the analysis chip 12 is pressed against the front surface 20A and the rear end 12A of the analysis chip 12 is separated from the front surface 20A) is applied to the analysis chip 12. In a case where the vertical rotation torque is applied to the analysis chip 12 in this manner, the rear end 12A of the analysis chip 12 may be lifted off the front surface 20A.

In a case where the rear end 12A of the analysis chip 12 lifts off the front surface 20A, the tip 22A of the transport bar 22 may slip under the analysis chip 12. In this case, the transport bar 22 may be sandwiched between the analysis chip 12 and the front surface 20A. In a case where the transport bar 22 is sandwiched between the analysis chip 12 and the front surface 20A, a transport failure of the analysis chip 12 may occur, or the tip 22A of the transport bar 22 may be difficult to come off from the underside of the analysis chip 12 in a case where the transport bar 22 is returned to its original position. In addition, in a case where the transport bar 22 is sandwiched between the analysis chip 12 and the front surface 20A, the transport bar 22 and the analysis chip 12 may rub against each other, and the transport bar 22 and/or the analysis chip 12 may be damaged. In addition, even in a case where the analysis chip 12 can be positioned in the target region 34, the sample may not be correctly spotted onto the reaction region 14 as long as the transport bar 22 remains lodged under the analysis chip 12.

In addition, in the analysis apparatus 200, a distance between the standby region 30 and the target region 34 is a distance over which the analysis chip 12 straddles the standby region 30 and the target region 34 in the transport direction of the analysis chip 12. Accordingly, in a process in which the analysis chip 12 is transported from the standby region 30 to the target region 34 by being pushed by the transport bar 22, the rear end 12A of the analysis chip 12 remains in the standby region 30. Therefore, as the rear end 12A of the analysis chip 12 lifts off the front surface 20A, other analysis chips 12 remaining in the cartridge 24 are pushed up from below, which may cause the weight 29 or the analysis chip 12 in the uppermost layer to protrude out of the cartridge 24 through its upper opening.

In view of the above circumstances, an example of an embodiment according to the present disclosure will be described below with reference to FIGS. 1 to 6. In the following embodiment, differences from the comparative example will be mainly described, and the same components will be denoted by the same reference numerals and the description thereof will be omitted.

### Embodiment

FIGS. 1 to 6 are schematic longitudinal cross-sectional views of an example of a partial configuration of a transport system included in an analysis apparatus 10 according to the present embodiment.

As shown in FIG. 1 as an example, the analysis apparatus 10 is different from the analysis apparatus 200 in that a sample spotting device 42 is provided instead of the sample spotting device 26, and a target region 44 is provided instead of the target region 34. The sample spotting device 42 is different from the sample spotting device 26 in that a cover 46 is provided instead of the cover 38 and a pressing mechanism 48 is provided instead of the weight 40. In the present embodiment, the analysis apparatus 10 is an example of an "analysis apparatus" according to the present disclosure. In addition, in the present embodiment, the pressing mechanism 48 is an example of a "pressing mechanism" according to the present disclosure.

The cover 46 is a translucent or transparent cover. In addition, the cover 46 is a container-shaped cover having an internal space. An opening 46A1 (that is, an opening corresponding to the opening 38A1 shown in FIG. 10) having a track shape in plan view and whose longitudinal direction is aligned with the X direction is formed in an upper wall 46A of the cover 46.

The cover 46 has a through-hole 46B corresponding to the through-hole 38B shown in FIG. 10, an opening 46B 1 corresponding to the opening 38B1 shown in FIG. 10, and an opening 46B2 corresponding to the opening 38B2 shown in FIG. 10.

The weight 40 is provided in the cover 38 shown in FIG. 10, whereas the weight 40 is not provided in the cover 46. Therefore, a space inside the cover 46 can be made wider than a space inside the cover 38 shown in FIG. 10 by the absence of the weight 40. In addition, since the weight 40 is not provided in the cover 46, the tip 12B of the analysis chip 12 can be smoothly inserted into the cover 38 as compared with a case where the cover 38 is used.

The target region 44 corresponding to the target region 34 shown in FIG. 10 is provided in the cover 46. A distance between the standby region 30 and the target region 44 is a distance over which the analysis chip 12 straddles the standby region 30 and the target region 44 in the transport direction of the analysis chip 12.

As in the above-described comparative example, the analysis chip 12 is transported to the target region 44 (see FIG. 3). A sample dropped from the nozzle of the spotting unit 36 is spotted onto the reaction region 14 of the analysis chip 12 located in the target region 44 (see FIG. 3).

A pair of ribs 46C is provided on a lower surface 46A2 of the upper wall 46A of the cover 46 at positions straddling the opening 46A1 in the Y direction. The pair of ribs 46C is a pair of rectangular parallelepiped-shaped ribs perpendicular to the lower surface 46A2. The longitudinal direction of the rib 46C is the X direction. The rib 44C protrudes downward from the upper side of the target region 44. That is, the rib 46C protrudes downward (that is, downward in the Z direction) from the lower surface 46A2 located above the target region 44. The pair of ribs 46C limits upward (that is, upward in the Z direction) movement of the analysis chip 12 transported into the cover 46. In the present embodiment, the pair of ribs 46C is an example of a "limiting member" according to the present disclosure.

Although the pair of ribs 46C (that is, two ribs) is illustrated here, this is merely an example, and, instead of the pair of ribs 46C, three or more ribs may be applied, or a single rib may be applied. In addition, although the rib 46C has been described as an example here, this is merely an example, and any member can be used as long as it limits the upward movement of the analysis chip 12 transported into the cover 46 and does not interfere with the transport of the analysis chip 12 or the movement of the transport bar 22.

A height H (that is, a distance from the front surface 20A of the transport table 20 to a lower surface 46C1 of the rib 46C) to the pair of ribs 46C in the target region 44 is greater than a thickness of the analysis chip 12 and is smaller than a sum of the thickness of the analysis chip 12 and a thickness of the transport bar 22.

The pressing mechanism 48 includes a leaf spring 50 and a wall 52. The pressing mechanism 48 laterally presses the analysis chip 12 in the target region 44. In order to realize lateral pressing of the analysis chip 12 in the target region 44, at least a part of the pressing mechanism 48 protrudes into the transport passage 32 in a state of being in a noncontact with the analysis chip 12. In FIG. 1, a part of the leaf spring 50 protrudes into the transport passage 32. In the present embodiment, the leaf spring 50 is an example of an "elastic member", a "spring", and a "leaf spring" according to the present disclosure. In addition, in the present embodiment, the wall 52 is an example of a "wall" according to the present disclosure.

In the cover 46, walls 52 and 54 facing each other in the Y direction are erected. The walls 52 and 54 are integrated with the front surface 20A and are erected perpendicular to the front surface 20A. In the cover 46, the analysis chip 12 is transported to a region sandwiched between the wall 52 and the wall 54 (see FIGS. 2 and 3). In the cover 46, one side surface 12C of both side surfaces of the analysis chip 12 (that is, one side surface and the other side surface in the Y direction) comes into contact with the wall 52, and the other side surface 12D of both side surfaces of the analysis chip 12 comes into contact with the wall 54.

In a case where the analysis chip 12 is continued to be transported in a state where the side surface 12C of the analysis chip 12 is in contact with the wall 52 and the side surface 12D of the analysis chip 12 is in contact with the wall 54, the side surface 12C of the analysis chip 12 slides on the wall 52, and the side surface 12D of the analysis chip 12 slides on the wall 54. In this manner, the walls 52 and 54 regulate the movement of the analysis chip 12 transported into the cover 46 in the Y direction in the cover 46. In the present embodiment, the side surface 12C is an example of "one side surface of the analysis chip" according to the present disclosure, and the side surface 12D is an example of "the other side surface of the analysis chip" according to the present disclosure.

The wall 54 has an opening 54A formed at a position corresponding to the target region 44. A tip part of the leaf spring 50 has a bent portion 50A. The bent portion 50A is bent at an obtuse angle. The bent portion 50A enters the target region 44 from the opening 54A.

The pressing mechanism 48 has a recessed portion 56. The recessed portion 56 is a surface that is continuous with the front surface 20A. The recessed portion 56 is formed across the opening 54A from the target region 44 side to the outside of the wall 54 (that is, the side opposite to the target region 44 with the wall 54 interposed therebetween). The recessed portion 56 has a step that falls perpendicular to the Z direction side relative to the front surface 20A, and a height of the step (that is, a depth of the recessed portion 56) is about half of the width of the leaf spring 50 with respect to the front surface 20A. The leaf spring 50 is fitted into the recessed portion 56 in a state where a width direction of the leaf spring 50 coincides with the Z direction and the bent portion 50A enters the target region 44 through the opening 54A.

A clamp member 58 and a stopper 60 are provided at the bottom of the recessed portion 56. The other end part of the leaf spring 50 is clamped by the clamp member 58 and an inner wall surface 56A of the recessed portion 56 by being inserted between the clamp member 58 and the inner wall surface 56A of the recessed portion 56. As a result, the other end part of the leaf spring 50 is fixed in the recessed portion 56.

In addition, the leaf spring 50 is installed at a position where the leaf spring 50 presses the side surface of the analysis chip 12 (that is, the side surface facing the opening 54A) in a state of being deformed into a shape in which an elastic force is accumulated. That is, the clamp member 58 and the inner wall surface 56A of the recessed portion 56 clamp the leaf spring 50 in a state where the leaf spring 50 is deformed into a shape in which the elastic force of the leaf spring 50 is accumulated (that is, in a state where the leaf spring 50 is bent).

The stopper 60 having a disk shape is provided in the recessed portion 56 at a position adjacent to the clamp member 58. The stopper 60 limits movement of one end part of the leaf spring 50 by coming into contact with the one end part of the leaf spring 50 in a case where the bent portion 50A is pressed by the analysis chip 12 from the target region 44 side.

As shown in FIG. 2 as an example, the rear end 12A of the analysis chip 12 located in the lowermost layer in the cartridge 24 is pressed along the front surface 20A by the tip 22A of the transport bar 22 via the through-hole 24A of the cartridge 24, thereby transporting the analysis chip 12 from the standby region 30 toward the target region 44. As a result, the tip 22A of the analysis chip 12 is inserted into the through-hole 46B via the opening 46B 1 of the cover 46. The side surface 12C of the analysis chip 12 slides on the wall 52, and the side surface 12D of the analysis chip 12 slides on the wall 54. In a case where the pressing of the tip 22A of the transport bar 22 against the rear end 12A of the analysis chip 12 is continued, a corner of the tip 12B of the analysis chip 12 on the side surface 12D side eventually comes into contact with the leaf spring 50 protruding from the opening 54A toward the transport passage 32 side.

In a case where the pressing of the tip 22A of the transport bar 22 against the rear end 12A of the analysis chip 12 is further continued, as shown in FIG. 3 as an example, the analysis chip 12 is pushed into the target region 44 by the transport bar 22 while receiving a lateral pressing force from the pressing mechanism 48. In this case, the bent portion 50A of the leaf spring 50 comes into contact with the side surface 12D of the analysis chip 12 in the target region 44 to press the side surface 12D. In this way, the bent portion 50A presses the side surface 12D of the analysis chip 12, so that the side surface 12C of the analysis chip 12 is pressed against the wall 52.

As shown in FIG. 3 as an example, the cover 46 has a clearance 46D. The clearance 46D is provided on an upper surface 12E side of the analysis chip 12 in a case where the analysis chip 12 is located in the target region 44, the clearance 46D extending across the entire upper surface 12E. The minimum height of the clearance 46D is a distance from the upper surface 12E of the analysis chip 12 located in the target region 44 to the lower surface 46C1 of the rib 46C. The distance from the upper surface 12E of the analysis chip 12 located in the target region 44 to the lower surface 46C1 of the rib 46C is shorter than the thickness of the transport bar 22.

In a case where the analysis chip 12 is located in the target region 44, the pressing of the transport bar 22 against the analysis chip 12 is temporarily interrupted. In this state, since the side surface 12D of the analysis chip 12 is pressed by the leaf spring 50 and the side surface 12C of the analysis chip 12 is pressed against the wall 52, the analysis chip 12 is held in the target region 44. In a case where the analysis chip 12 is located in the target region 44, the spotting unit 36 drops a sample, and the sample is spotted onto the reaction region 14.

In a case where the spotting of the sample onto the reaction region 14 is completed, the pressing of the transport bar 22 against the analysis chip 12 is resumed. That is, the rear end 12A of the analysis chip 12 is pressed by the tip 22A of the transport bar 22 again, and, as shown in FIG. 4 as an example, the analysis chip 12 is loaded into the incubator 28.

After the analysis chip 12 is loaded into the incubator 28, as shown in FIG. 5 as an example, the transport bar 22 moves in a direction opposite to the transport direction of the analysis chip 12. Then, as shown in FIG. 6 as an example, the transport bar 22 is returned to its original position.

In a case where the tip 22A of the transport bar 22 passes through the openings 24A2 and 24A1 of the through-hole 24A of the cartridge 24 in order in a process in which the transport bar 22 is returned to its original position from the target region 44, as shown in FIG. 6 as an example, one analysis chip 12 falls into the standby region 30 due to the weight of each analysis chip 12 in the cartridge 24. The analysis chip 12 thus disposed in the standby region 30 is a target to be transported to the target region 44 by the transport bar 22.

In the manner described above, the operation of the transport bar 22 along the X direction (that is, the operation of transporting the analysis chip 12 from the standby region 30 to the target region 44 and the operation of dropping the analysis chip 12 in the cartridge 24 into the standby region 30) is repeated, so that the analysis chips 12 in the cartridge 24 are transported one by one from the standby region 30 to the target region 44. That is, the transport bar 22 reciprocates between the standby region 30 and the target region 44 via the through-hole 24A of the cartridge 24 to transport the plurality of analysis chips 12 stackedin the cartridge 24 to the target region 44 in order from the analysis chip 12 on the lowermost layer side to the analysis chip 12 on the uppermost layer side.

Next, operations and effects of the parts of the analysis apparatus 10 according to the present disclosure will be described.

The plurality of analysis chips 12 are stackedalong the Z direction in the cartridge 24 provided on the front surface 20A of the transport table 20 under the self-weight of each analysis chip 12 (see FIGS. 1 to 6). The rear end 12A of the analysis chip 12 located in the lowermost layer in the cartridge 24 (that is, the analysis chip 12 located in the standby region 30) is pressed by the tip 22A of the transport bar 22 via the opening 24A1 of the cartridge 24, thereby pushing the analysis chip 12 out of the opening 24A2 of the cartridge 24 toward the target region 44 (see FIGS. 2 and 3). The analysis chip 12 moves on the transport passage 32 toward the target region 44 (see FIGS. 2 and 3).

As the tip 22A of the transport bar 22 continues to press the rear end 12A of the analysis chip 12, the tip 12B of the analysis chip 12 eventually comes into contact with the leaf spring 50 that protrudes into the transport passage 32 in the cover 46 (see FIG. 2). In a case where the tip 22A of the transport bar 22 further presses the rear end 12A of the analysis chip 12, the analysis chip 12 continues to move toward the target region 44 against the elastic force of the leaf spring 50. As a result, the tip 12B of the analysis chip 12 rides over the bent portion 50A of the leaf spring 50, and the side surface 12D of the analysis chip 12 receives the elastic force of the leaf spring 50 (see FIG. 3). The side surface 12D of the analysis chip 12 receives the elastic force of the leaf spring 50, and thus the side surface 12C of the analysis chip 12 is pressed against the wall 52 (see FIG. 3). In this way, the analysis chip 12 can be pushed into the target region 44 while being held by the pressing force applied to the analysis chip 12 from both sides.

In a case where the analysis chip 12 continues to move toward the target region 44, the side surface 12D of the analysis chip 12 presses the bent portion 50A of the leaf spring 50. As a result, the bent portion 50A of the leaf spring 50 is pushed into the recessed portion 56 by the side surface 12D of the analysis chip 12. Accordingly, the tip part of the leaf spring 50 is pressed against the stopper 60, so that the movement of the tip part of the leaf spring 50 is suppressed.

In this state, in a case where the tip 22A of the transport bar 22 continues to press the rear end 12A of the analysis chip 12, the analysis chip 12 eventually reaches the target region 44 (see FIG. 3). In a case where the analysis chip 12 reaches the target region 44, the pressing of the transport bar 22 against the analysis chip 12 is temporarily interrupted. In this case, the side surface 12D of the analysis chip 12 is in contact with the bent portion 50A of the leaf spring 50, and receives the elastic force of the leaf spring 50 from the bent portion 50A. The side surface 12D of the analysis chip 12 receives the elastic force of the leaf spring 50, and thus the side surface 12C of the analysis chip 12 is pressed against the wall 52 (see FIG. 3). As a result, the analysis chip 12 is pressed from both sides in the target region 44, so that the analysis chip 12 is held in the target region 44 (see FIG. 3).

In this manner, the analysis chip 12 is pressed from both sides by the pressing mechanism 48, so that a vertical torque is less likely to be applied to the analysis chip 12, as described in the comparative example. Accordingly, it is possible to suppress the occurrence of the phenomenon in which the rear end 12A of the analysis chip 12 lifts off the front surface 20A of the transport table 20 while the analysis chip 12 is being transported from the standby region 30 to the target region 44 as the rear end 12A of the analysis chip 12 is pushed by the tip 22A of the transport bar 22.

In addition, the distance between the standby region 30 and the target region 44 is a distance over which the analysis chip 12 straddles the standby region 30 and the target region 44 in the transport direction of the analysis chip 12. In this case, the rear end 12A of the analysis chip 12 remains in the standby region 30 in the cartridge 24 while the analysis chip 12 is being transported from the standby region 30 to the target region 44. However, since the analysis chip 12 is pressed from both sides by the pressing mechanism 48, the rear end 12A of the analysis chip 12 is subjected to some kind of physical external force within the target region 44 in a state where the analysis chip 12 has not yet left the standby region 30, making it difficult to apply a vertical torque to the analysis chip 12. In a case where it is difficult to apply the vertical torque to the analysis chip 12, it is possible to suppress the occurrence of the phenomenon in which the rear end 12A of the analysis chip 12 lifts off the front surface 20A of the transport table 20. As a result, it is possible to prevent the occurrence of the phenomenon in which the rear end 12A of the analysis chip 12 lifts off the front surface 20A of the transport table 20 in a state where the analysis chip 12 has not yet left the standby region 30, causing other analysis chips 12 stacked in the cartridge 24 to be pushed up from below.

In addition, the analysis chip 12 stacked on the upper layer of the analysis chip 12 in the lowest layer in the cartridge 24 acts as a weight with respect to the analysis chip 12 in the lowest layer, making it difficult for the analysis chip 12 in the lowermost layer in the cartridge 24 (for example, the analysis chip 12 that has not yet left the standby region 30) to lift off the front surface 20A of the transport table 20.

In addition, since the analysis chip 12 is held in the target region 44 by the pressing force applied to the analysis chip 12 from both sides, it is possible to make it difficult to generate a torque (that is, the vertical torque) that acts in a direction in which the rear end 12A of the analysis chip 12 is lifted by the tip 22A of the transport bar 22 pressing against the rear end 12A of the analysis chip 12, as compared with a case where the analysis chip 12 is held by pressing a tip part of the analysis chip 12 from above. In addition, the pressing force applied to the analysis chip 12 from both sides is realized by a pressing force of the leaf spring 50 against the side surface 12D of the analysis chip 12 and a reaction force from the wall 52 to the side surface 12C of the analysis chip 12. Accordingly, the pressing force applied to the analysis chip 12 from both sides can be realized with a simple configuration.

In addition, since the clearance 46D is provided on the upper surface 12E side of the analysis chip 12 located in the target region 44, the clearance 46D extending across the entire upper surface 12E, vertical movement of the analysis chip 12 located in the target region 44 can be allowed. In addition, since the cover 46 is provided with the pair of ribs 46C, the amount of vertical movement of the analysis chip 12 located in the target region 44 can be limited by the pair of ribs 46C. In addition, since the height to the pair of ribs 46C in the target region 44 is greater than the thickness of the analysis chip 12 and is smaller than the sum of the thickness of the analysis chip 12 and the thickness of the transport bar 22, the analysis chip 12 and the transport bar 22 in the target region 44 can be prevented from overlapping each other in the vertical direction.

While the pressing of the transport bar 22 against the analysis chip 12 is interrupted, the analysis chip 12 is held in the target region 44 by the pressing force applied to the analysis chip 12 from both sides, and, in this state, the spotting unit 36 drops a sample onto the reaction region 14 of the analysis chip 12. As a result, the sample is spotted onto the reaction region 14.

In a case where the spotting of the sample onto the reaction region 14 is completed, the pressing of the tip 22A of the transport bar 22 against the rear end 12A of the analysis chip 12 is resumed, and the analysis chip 12 is loaded into the incubator 28. In a case where the analysis chip 12 is loaded into the incubator 28, and in a case where an excessive pressing force is applied to the side of the rear end 12A of the analysis chip 12 in the target region 44, the analysis chip 12 may be ejected forcefully toward the incubator 28. Therefore, in order to suppress the occurrence of such a situation, the leaf spring 50 is set at a position where the leaf spring 50 presses the side surface 12D of the analysis chip 12 in a state of being deformed into a shape in which the elastic force is accumulated. Accordingly, it is possible to prevent the application of an excessive pressing force to the side of the rear end 12A of the analysis chip 12 in the target region 44, and, as a result, it is possible to suppress the occurrence of a situation in which the analysis chip 12 is ejected forcefully toward the incubator 28.

After the analysis chip 12 is loaded into the incubator 28, the transport bar 22 is retracted to its original position. As a result, the analysis chip 12 located in the lowermost layer in the cartridge 24 is updated, and it becomes possible to press the analysis chip 12 located in the lowermost layer in the cartridge 24 with the transport bar 22 (that is, to transport the analysis chip 12 using the transport bar 22). That is, the transport bar 22 reciprocates between the standby region 30 and the target region 44 to transport the plurality of analysis chips 12 stacked in the cartridge 24 from the standby region 30 to the target region 44 in order from the analysis chip 12 on the lowermost layer side to the analysis chip 12 on the uppermost layer side. This makes it possible to efficiently transport each of the plurality of analysis chips 12 stacked in the cartridge 24 from the standby region 30 in the cartridge 24 to the target region 44.

In the above-described embodiment, the leaf spring 50 has been described as an example, but this is merely an example, and a compression coil spring may be applied instead of the leaf spring 50, a polymer material member (for example, a member formed of an elastomer or a silicone rubber) having an elastic force may be applied instead of the leaf spring 50, and the present disclosure is established as long as an elastic member having an elastic force capable of pressing the side of the analysis chip 12 in the target region 44 and holding the analysis chip 12 in the target region 44 is provided.

In the above-described embodiment, the pressing mechanism 48 has been described as an example, but this is merely an example, and, as shown in FIG. 7 as an example, a pressing mechanism 62 can also be applied instead of the pressing mechanism 48.

The pressing mechanism 62 is different from the pressing mechanism 48 in that a leaf spring 64 is further provided, that a wall 66 is provided instead of the wall 52, that a recessed portion 68 is further provided, that a clamp member 70 is further provided, and that a stopper 72 is further provided. The leaf spring 64 has a bent portion 64A corresponding to the bent portion 50A. The wall 66 has an opening 66A corresponding to the opening 54A. The recessed portion 68 has an inner wall surface 68A corresponding to the inner wall surface 56A.

The leaf spring 64, the wall 66, the opening 66A, the recessed portion 68, the clamp member 70, and the stopper 72 are provided on the opposite side of the leaf spring 50, the wall 54, the opening 54A, the recessed portion 56, the clamp member 58, and the stopper 60 across the opening 46A1 in the Y direction. In other words, the leaf spring 64, the wall 66, the opening 66A, the recessed portion 68, the clamp member 70, and the stopper 72 are provided to be symmetrical in plan view with the leaf spring 50, the wall 54, the opening 54A, the recessed portion 56, the clamp member 58, and the stopper 60, with a center line CL as a symmetry axis. The center line CL refers to an imaginary line that passes through the center of the width of the opening 46A1 (in other words, the center of the opening 46A1 in the Y direction) and that crosses the opening 46A1 in the X direction.

As in a case where the bent portion 50A protrudes into the transport passage 32 from the opening 54A in a state where the leaf spring 50 and the analysis chip 12 are not in contact with each other, the bent portion 64A protrudes into the transport passage 32 from the opening 66A even in a state where the leaf spring 64 and the analysis chip 12 are in contact with each other. In addition, as with the leaf spring 50 being fitted into the recessed portion 56, the leaf spring 64 is also fitted into the recessed portion 68. In addition, as with the leaf spring 50, the leaf spring 64 is also installed at a position where the leaf spring 64 presses the side surface 12C (see FIGS. 2 and 3) of the analysis chip 12 in a state of being deformed into a shape in which an elastic force is accumulated.

With such a configuration, the side surface 12D (see FIGS. 2 and 3) of the analysis chip 12 is pressed by the bent portion 50A of the leaf spring 50 in the target region 44, and the side surface 12C (see FIGS. 2 and 3) of the analysis chip 12 is pressed by the bent portion 64A of the leaf spring 64 in the target region 44. As a result, the same effects as those of the above-described embodiment can be obtained.

In the example shown in FIG. 7, the leaf spring 50 is an example of a "first elastic member", a "spring", and a "leaf spring" according to the present disclosure, and the leaf spring 64 is an example of a "second elastic member", a "spring", and a "leaf spring" according to the present disclosure.

In the example shown in FIG. 7, the leaf springs 50 and 64 have been described as an example, but this is merely an example, and a pair of compression coil springs may be applied instead of the leaf springs 50 and 64, a pair of polymer material members (for example, a member formed of an elastomer or a silicone rubber) having an elastic force may be applied instead of the leaf springs 50 and 64, and the present disclosure is established as long as a pair of elastic members having an elastic force capable of pressing both sides of the analysis chip 12 in the target region 44 and holding the analysis chip 12 in the target region 44 is provided.

In the above-described embodiment, an example of a form in which the side surface 12D of the analysis chip 12 is pressed by the leaf spring 50 has been described, but this is merely an example, and, for example, as shown in FIG. 8, the side surface 12D of the analysis chip 12 may be pressed by an elastic member 74 instead of the leaf spring 50.

The elastic member 74 includes a pair of compression coil springs 74A and a transmitting member 74B attached to the pair of compression coil springs 74A. The transmitting member 74B is a member made of a resin, wood, or metal. A tip part 74B1 of the transmitting member 74B protrudes into the transport passage 32 from the opening 54A. Tapers 74B1a and 74B1b are formed at both end parts of the tip part 74B1 in the X direction.

The pair of compression coil springs 74A is provided at a base end part 74B2 of the transmitting member 74B. One end part of the pair of compression coil springs 74A is fixed to a frame 76 fixed to the transport table 20, and the other end part of the pair of compression coil springs 74A is fixed to the base end part 74B2 of the transmitting member 74B.

The transmitting member 74B comes into contact with the side surface 12D of the analysis chip 12 in the target region 44 to transmit an elastic force of the compression coil spring 74A to the side surface 12D of the analysis chip 12.

As with the leaf springs 50 and 64, the pair of compression coil springs 74A is also installed at a position where the pair of compression coil springs 74A presses the side surface 12D (see FIGS. 2 and 3) of the analysis chip 12 in a state of being deformed into a shape in which an elastic force is accumulated. In the example shown in FIG. 8, the elastic member 74 is fitted in a state where the compression coil spring is contracted between an edge portion 54A1 forming the opening 54A and the frame 76, and the elastic member 74 is clamped between the edge portion 54A1 and the frame 76. The edge portion 54A1 is in contact with base end sides of the tapers 74B1a and 74B1b, and tip sides of the tapers 74B1a and 74B1b protrude into the transport passage 32. Accordingly, the tip 12B of the analysis chip 12 pressed by the transport bar 22 comes into contact with the tip side of the taper 74B1a and rides over the taper 74B1a, and the elastic force of the pair of compression coil springs 74A is transmitted to the side surface 12D of the analysis chip 12 by the transmitting member 74B. As a result, similarly to the above-described embodiment, the side surface 12D of the analysis chip 12 in the target region 44 is pressed by the elastic member 74, and the side surface 12C of the analysis chip 12 is pressed against the wall 52. In this way, the same effects as those of the above-described embodiment can be obtained.

In the example shown in FIG. 8, the elastic member 74 is an example of an "elastic member" according to the present disclosure, the pair of compression coil springs 74A is an example of a "spring" according to the present disclosure, and the transmitting member 74B is an example of a "transmitting member" according to the present disclosure.

In the example shown in FIG. 8, an example of a form in which the side surface 12D (see FIGS. 2 and 3) of the analysis chip 12 in the target region 44 is pressed by the elastic member 74 has been described, but this is merely an example, and, as shown in FIG. 9 as an example, the analysis chip 12 (see FIGS. 2 and 3) in the target region 44 may be pressed by a pair of elastic members (in the example shown in FIG. 9, elastic members 74 and 78) from both sides.

In the example shown in FIG. 9, a wall 66 (see FIG. 7) is used. The elastic member 78 includes a pair of compression coil springs 78A corresponding to the pair of compression coil springs 74A and a transmitting member 78B corresponding to the transmitting member 74B. In addition, as in a case where the elastic member 74 is fixed to the frame 76, the elastic member 78 is also fixed to a frame 80 corresponding to the frame 76. As in a case where the tip part 74B 1 of the transmitting member 74B protrudes into the transport passage 32 from the opening 54A, a tip part of the transmitting member 78B also protrudes into the transport passage 32 from the opening 66A. That is, the wall 66 and the elastic member 78 are provided on a side opposite to the wall 54 and the elastic member 74 across the opening 46A1 in the Y direction. In other words, the wall 66 and the elastic member 78 are provided to be symmetrical in plan view with the wall 54 and the elastic member 74, with a center line CL as a symmetry axis.

With such a configuration, the side surface 12D (see FIGS. 2 and 3) of the analysis chip 12 in the target region 44 is pressed by the elastic member 74, and the side surface 12C (see FIGS. 2 and 3) of the analysis chip 12 in the target region 44 is pressed by the elastic member 78, so that the same effects as those of the above-described embodiment can be obtained.

In the example shown in FIG. 9, the elastic member 74 is an example of a "first elastic member" according to the present disclosure, and the elastic member 78 is an example of a "second elastic member" according to the present disclosure. In addition, in the example shown in FIG. 9, the pair of compression coil springs 74A is an example of a "first spring" according to the present disclosure, and the pair of compression coil springs 78A is an example of a "second spring" according to the present disclosure. In addition, in the example shown in FIG. 9, the transmitting member 74B is an example of a "first transmitting member" according to the present disclosure, and the transmitting member 78B is an example of a "second transmitting member" according to the present disclosure.

In the above-described embodiment, an example of a form in which the cartridge 24 is placed on the front surface 20A has been described, but the present disclosure is not limited to this. For example, a cartridge having a rectangular cylindrical shape with upper and lower openings may be used in a suspended state. In this case, a plurality of analysis chips 12 are stacked in the cartridge in the Z direction, but only the analysis chip 12 in the lowermost layer is placed on the front surface 20A, and the cartridge is suspended in a state where the remaining analysis chips 12 are accommodated in the cartridge. The transport bar 22 transports the analysis chip 12 in the lowermost layer from the standby region 30 to the target region 44 along the transport passage 32 by pushing the analysis chip 12.

In the above-described embodiment, an example of a form in which no weight is placed on the analysis chip 12 in the uppermost layer of the cartridge 24 has been described, but this is merely an example, and a weight may be placed on the analysis chip 12 in the uppermost layer of the cartridge 24. In this case, a transport mechanism capable of transporting the weight may be used. The transport mechanism, in response to externally applied power, transports the weight to and places it on the analysis chip 12 in the uppermost layer of the cartridge 24 in a case where the weight is in use, and transports the weight to an accommodation portion and accommodates it in the accommodation portion in a case where the weight is not in use. The transport mechanism may be shiftable in a height direction, and, by changing the height in a case where the transport mechanism is not in use, the transport mechanism may be disposed at a position where the transport passage 32 between the cartridge 24 and the cover 46 is blocked.

The above-described contents and the above-shown contents are the detailed description of the parts according to the present disclosure, and are merely examples of the present disclosure. For example, description related to the above configurations, functions, actions, and effects is description related to an example of configurations, functions, actions, and effects of the parts relating to the present disclosure. Thus, it is needless to say that unnecessary parts may be deleted, new elements may be added, or replacement may be made to the content of the above description and the content of the drawings without departing from the scope of the present disclosure. In addition, in order to avoid complications and facilitate understanding of the parts according to the present disclosure, the description of common technical knowledge or the like, which does not particularly require the description for enabling the implementation of the present disclosure, is omitted in the above-described contents and the above-shown contents.

## Claims

1. An analysis apparatus (10) comprising:
a transport bar that transports a flat analysis chip (12) located in a standby region (30) on a transport table (20) to a target region (44) by pushing a rear end (12A) of the analysis chip (12) along the transport table (20); and
a pressing mechanism (48) that laterally presses the analysis chip (12) in the target region (44).

2. The analysis apparatus (10) according to claim 1,
wherein a plurality of the analysis chips (12) are capable of being stacked in a cartridge (24) provided on the transport table (20) under their own weight, and
the standby region (30) is a region where the analysis chip (12) in a lowermost layer among the plurality of analysis chips (12) stacked in the cartridge (24) is located.

3. The analysis apparatus (10) according to claim 2, further comprising:
a transport passage (32) that is a path along which the analysis chip (12) is transported from the standby region (30) to the target region (44),
wherein the cartridge (24) has an opening (24A1, 24A2) at a position corresponding to the transport passage (32).

4. The analysis apparatus (10) according to claim 2 or 3,
wherein the cartridge (24) has a through-hole (24A) at a position facing the target region (44) in a transport direction of the analysis chip (12), and
the transport bar (22) transports the analysis chip (12) to the target region (44) by pushing the rear end (12A) of the analysis chip (12) in the lowermost layer along the transport table (20) via the through-hole (24A).

5. The analysis apparatus (10) according to claim 4,
wherein the transport bar (22) reciprocates between the standby region (30) and the target region (44) via the through-hole (24A) to transport the plurality of analysis chips (12) stacked in the cartridge (24) from the standby region (30) to the target region (44) in order from the analysis chip (12) on a lowermost layer side to the analysis chip (12) on an uppermost layer side.

6. The analysis apparatus (10) according to any one of claims 2 to 5,
wherein a distance between the standby region (30) and the target region (44) is a distance over which the analysis chip (12) straddles the standby region (30) and the target region (44) in a transport direction of the analysis chip (12).

7. The analysis apparatus (10) according to any one of claims 1 to 6, further comprising:
a transport passage (32) that is a path along which the analysis chip (12) is transported from the standby region (30) to the target region (44),
wherein at least a part of the pressing mechanism (48) protrudes into the transport passage (32) in a state where the pressing mechanism (48) and the analysis chip (12) are not in contact with each other.

8. The analysis apparatus (10) according to any one of claims 1 to 7,
wherein the analysis chip (12) is pushed into the target region (44) by the transport bar (22) while receiving a lateral pressing force from the pressing mechanism (48).

9. The analysis apparatus (10) according to any one of claims 1 to 8,
wherein a clearance (46D) is provided on an upper surface (12E) side of the analysis chip (12) located in the target region, the clearance (46D) extending across an entire upper surface (12E) of the analysis chip (12).

10. The analysis apparatus (10) according to any one of claims 1 to 9,
wherein a limiting member (46C) that limits upward movement of the analysis chip (12) is provided in the target region (44).

11. The analysis apparatus (10) according to claim 10,
wherein a height to the limiting member (46C) in the target region (44) is greater than a thickness of the analysis chip (12) and is smaller than a sum of the thickness of the analysis chip (12) and a thickness of the transport bar (22).

12. The analysis apparatus (10) according to claim 10 or 11,
wherein the limiting member (46C) is at least one rib (46C) that protrudes from an upper side to a lower side of the target region (44).

13. The analysis apparatus (10) according to any one of claims 1 to 12,
wherein the pressing mechanism (48) has a wall (52) with which one side surface (12C) of the analysis chip (12) comes into contact in the target region (44), and an elastic member (50) that presses the other side surface (12D) of the analysis chip (12) in the target region (44), and
the elastic member (50) presses the one side surface (12C) against the wall (52) by pressing the other side surface (12D) in the target region (44).

14. The analysis apparatus (10) according to claim 13,
wherein the elastic member (50) is installed at a position where the elastic member (50) presses the other side surface (12D) in a state of being deformed into a shape in which an elastic force is accumulated.

15. The analysis apparatus (10) according to claim 13 or 14,
wherein the elastic member (50) is a spring.

16. The analysis apparatus (10) according to claim 15,
wherein the spring is a leaf spring.

17. The analysis apparatus (10) according to claim 13 or 14,
wherein the elastic member (50) is a member including a spring (74A) and a transmitting member (74B) that is attached to the spring (74A) and that transmits an elastic force of the spring (74A) to the other side surface (12D) by coming into contact with the other side surface (12D).

18. The analysis apparatus (10) according to any one of claims 1 to 12,
wherein the pressing mechanism (48) includes a first elastic member (74) that presses one side surface (12C) of the analysis chip (12) in the target region (44), and a second elastic member (78) that presses the other side surface (12D) of the analysis chip (12) in the target region.

19. The analysis apparatus (10) according to claim 18,
wherein the first elastic member (74) is installed at a position where the first elastic member (74) presses the one side surface (12C) in a state of being deformed into a shape in which an elastic force is accumulated, and
the second elastic member (78) is installed at a position where the second elastic member presses the other side surface (12D) in a state of being deformed into a shape in which an elastic force is accumulated.

20. The analysis apparatus (10) according to claim 18 or 19,
wherein the first elastic member (74) and/or the second elastic member (78) is a spring.

21. The analysis apparatus (10) according to claim 20,
wherein the spring is a leaf spring.

22. The analysis apparatus (10) according to claim 18 or 19,
wherein the first elastic member (74) is a member including a first spring (74A) and a first transmitting member (74B) that is attached to the first spring (74A) and that transmits an elastic force of the first spring (74A) to the one side surface (12C) by coming into contact with the one side surface (12C), and
the second elastic member (78) is a member including a second spring (78A) and a second transmitting member (78B) that is attached to the second spring (78A) and that transmits an elastic force of the second spring (78A) to the other side surface (12D) by coming into contact with the other side surface (12D).

23. The analysis apparatus (10) according to any one of claims 1 to 22,
wherein the target region (44) is provided in a processing section (26) that performs processing on the analysis chip (12).

24. The analysis apparatus (10) according to claim 23,
wherein the processing includes spotting of a sample.
